# EUROPÄISCHE PATENTANMELDUNG

(11) **EP 3 863 158 A1**
(43) Veröffentlichungstag der Anmeldung: **11.08.2021**
(21) Anmeldenummer: 20216827.4
(22) Anmeldetag: 23.12.2020
(51) Int. Cl.: H02K 5/22, H02K 5/10, H02K 7/116, H02K 11/33

(54) **E-ACHSEN-MODUL**

(30) Priorität: 05.02.2020 DE 102020201366
(71) Anmelder: Robert Bosch GmbH, 70442 Stuttgart (DE)
(72) Erfinder: Zweigle, Peter, 71254 Ditzingen (DE); Schoeneck, Marie-Luies, 71723 Grossbottwar (DE); Schuelin, Anton, 04177 Leipzig (DE)

(57) **Zusammenfassung**

Die Erfindung bezieht sich auf ein E-Achsen-Modul (10) mit einer elektrischen Maschine und einem Getriebe, sowie einer Leistungselektronik (12), die über ein Hochvoltanschlusskabel (20) an einem Hochvolteingang (40) mit einer Spannungsquelle verbunden ist. Das Hochvoltanschlusskabel (20) ist am Hochvolteingang (40) mittels eines nicht-demontierbaren Festanschlusses (46) angeschlossen.

## Beschreibung

### Technisches Gebiet

Die Erfindung bezieht sich auf ein E-Achsen-Modul mit einer elektrischen Maschine, einem Getriebe, und einer Leistungselektronik, die über ein Hochvoltanschlusskabel an einem Hochvolteingang mit einer Spannungsquelle verbunden ist.

### Stand der Technik

DE 10 2017 113 415 A1 bezieht sich auf einen Adapter für einen Leitungssatz eines Bordnetzes eines Kraftfahrzeugs. Der Adapter umfasst ein geschirmtes Adaptergehäuses sowie einen ersten gehäuseseitigen Eintrittsbereich für zumindest einen geschirmten Leiter, in welchem zur Schirmübergabe eine Schirmung des geschirmten Leiters mit dem Adaptergehäuse verbindbar ist, und durch welchen ein Innenleiter des geschirmten Leiters in das Adaptergehäuse einführbar ist. Des Weiteren ist eine gehäuseseitige mechanische Schnittstelle zum Befestigen eines EMV-Filters am Adaptergehäuse vorgesehen, ferner ein zweiter gehäuseseitiger Eintrittsbereich zum Einführen von mindestens einem ungeschirmten Leiter des EMV-Filters in das Adaptergehäuse, so dass darin der ungeschirmte Leiter des EMV-Filters und der Innenleiter des geschirmten Leiters miteinander kontaktierbar sind.

DE 10 2016 106 104 A1 bezieht sich auf eine elektrische Motoreinheit für eine mobile Arbeitsmaschine. Diese umfasst mindestens einen elektrischen Antriebsmotor sowie eine zur Ansteuerung des Antriebsmotors bestimmte Leistungselektronik, die in einem Leistungselektronikgehäuse angeordnet ist. Das Leistungselektronikgehäuse ist über eine Trennfuge mit einem Motorgehäuse verbunden, ferner sind Druckkontakte von Leistungsanschlüssen der Leistungselektronik und des Antriebsmotors im Verbindungsbereich von Leistungselektronikgehäuse und Motorgehäuse im Inneren der Gehäuse angeordnet und wirken zur Herstellung einer elektrischen Verbindung zusammen. Mindestens einer der Druckkontakte ist in Richtung auf seinen mit diesem zusammenwirkenden Druckkontakt mit einer Federkraft beaufschlagt und über eine Mindeststrecke beweglich angeordnet. Des Weiteren steht ein Druckkontakt (Linienkontakt) und der mit diesem zusammenwirkende Druckkontakt in Flächenkontakt.

DE 10 2010 056 008 A1 bezieht sich auf eine Vorrichtung und ein Verfahren zur elektrischen Kontaktierung. Es wird eine Schaltungsanordnung und ein Verfahren zur elektrischen Kontaktierung mindestens eines elektrischen Bauteils, insbesondere eines elektrischen Bauteils in einem Kraftfahrzeug vorgeschlagen. Eine Spannungsquelle wird über mindestens eine elektrische Leitung mit mindestens einem Element zur elektrischen Kontaktierung elektrisch verbunden, wobei das Element zur elektrischen Kontaktierung mit dem mindestens einen elektrischen Bauteil elektrisch verbunden ist, und das mindestens eine elektrische Bauteil innerhalb eines Gehäuses angeordnet ist. Das Element zur elektrischen Kontaktierung ist innerhalb des Gehäuses angeordnet und als elektrisch-funktionelles Element ausgebildet.

### Darstellung der Erfindung

Erfindungsgemäß wird ein E-Achsen-Modul mit einer elektrischen Maschine, einem Getriebe und einer Leistungselektronik vorgeschlagen, die über ein Hochvoltanschlusskabel an einem Hochvolteingang mit einer Spannungsquelle verbunden ist. Das Hochvoltanschlusskabel ist am Hochvolteingang mittels eines nicht-demontierbaren Festanschlusses angeschlossen. Dadurch wird in vorteilhafter Weise eine erhebliche Einsparung von wenig benötigten Anschlussteilen erreicht und des Weiteren eine Fehlerwahrscheinlichkeit bei der Montage des Hochvoltanschlusskabels erheblich reduziert.

In vorteilhafter Weise ist das E-Achsen-Modul so ausgebildet, dass der nicht-demontierbare Festanschluss des Hochvoltanschlusskabels mindestens eine staubdichte- und/oder Spritzwasserabdichtung umfasst.

In Weiterbildung der erfindungsgemäß vorgeschlagenen Lösung ist das E-Achsen-Modul derart ausgebildet, dass der nicht-demontierbare Festanschluss des Hochvoltanschlusskabels in ein Kunststoffgehäuseteil eingegossen ist. Alternativ dazu kann der nicht-demontierbare Festanschluss des Hochvoltanschlusskabels in das Kunststoffmaterial des Kunststoffgehäuseteils eingespritzt werden. In vorteilhafter Weise kann ausgenutzt werden, dass bei der Herstellung von Gehäuseteilen aus Kunststoffmaterial unmittelbar eine nicht-demontierbare Verbindung zwischen dem Hochvoltanschlusskabel einerseits und dem aus Kunststoffmaterial gefertigten Kunststoffgehäuseteil des E-Achsen-Moduls andererseits hergestellt wird.

In Weiterbildung der erfindungsgemäß vorgeschlagenen Lösung ist das E-Achsen-Modul so ausgeführt, dass das am nicht-demontierbaren Festanschluss angeschlossene Hochvoltanschlusskabel einen fahrzeugseitigen Stecker aufweist. Durch die erfindungsgemäß vorgeschlagene Lösung kann somit eine ansonsten erforderliche Hochvoltkopplung mit dem E-Achsen-Modul-seitigen Ende des Hochvoltanschlusskabels eingespart werden.

Das E-Achsen-Modul ist in vorteilhafter Lösung so beschaffen, dass das Hochvoltanschlusskabel zweipolig ausgeführt ist und einen ersten Kabelstrang sowie einen zweiten Kabelstrang umfasst. Die beiden genannten Kabelstränge sind gegeneinander isoliert und verlaufen im Wesentlichen parallel zueinander.

In Weiterbildung des erfindungsgemäß vorgeschlagenen E-Achsen-Moduls sind die beiden Kabelstränge am Fahrzeugseitigen Ende in einem gemeinsamen, fahrzeugseitigen Stecker aufgenommen.

Darüber hinaus bezieht sich die Erfindung auf die Verwendung eines nicht-demontierbaren Festanschlusses zur elektrischen Verbindung zwischen einem Hochvoltanschlusskabel einerseits und einem E-Achsen-Moduls andererseits, insbesondere einer an dieser aufgenommenen Leistungselektronik.

### Vorteile der Erfindung

In vorteilhafter Weise kann durch die erfindungsgemäß vorgeschlagene Lösung erreicht werden, dass der Kostenaufwand für einen Stecker zum Anschluss des Hochvoltanschlusskabels am E-Achsen-Modul eingespart werden kann. Des Weiteren kann in vorteilhafter Weise der Aufwand für einen separat zu verschließenden Anschlusskasten erreicht werden; ferner ist eine erhebliche Vereinfachung der Handhabung gegeben, des Weiteren kann insbesondere die Durchführung von fehlerhaften Anschlussarbeiten vermieden werden.

Durch den Einsatz der erfindungsgemäß vorgeschlagenen Lösung kann das Hochvoltanschlusskabel bereits beim Hersteller des E-Achsen-Moduls fest installiert werden, insbesondere nicht-demontierbar befestigt werden. Es können bereits bei der Montage staubdichte und spritzwasserdichte Abdichtungen vorgesehen werden, des Weiteren ist lediglich am fahrzeugseitigen Ende des Hochvoltanschlusskabels ein Stecker erforderlich. Durch die erfindungsgemäß vorgeschlagene Lösung kann eine Hochvoltanschlusskabel-Kupplung auf der Anschlussseite des E-Achsen-Moduls eingespart werden.

Weiterhin kann durch die erfindungsgemäß vorgeschlagene Lösung das Risiko von Fehlermontagen und sich daraus ergebender, gegebenenfalls ungerechtfertigter Reklamationen durch den Fahrzeughersteller, an den das E-Achsen-Modul geliefert wird, minimiert werden. Ferner können durch die erfindungsgemäß vorgeschlagene Lösung in vorteilhafter Weise Transportschutzkappen sowie weitergehende Schutzmaßnahmen eingespart werden.

Bei der erfindungsgemäß vorgeschlagenen Lösung besteht des Weiteren der Vorteil, dass bei der Fertigung von Gehäusekomponenten aus Kunststoffmaterial, insbesondere auf der Seite der Leistungselektronik am Hochvolteingang, ein nicht-demontierbarer Festanschluss realisiert werden kann. Dies kann beispielsweise dadurch erfolgen, dass der nicht-demontierbare Festanschluss in das Kunststoffmaterial beispielsweise eingegossen, oder bei der Herstellung eines Kunststoffgetriebegehäuseteils in das Kunststoffmaterial eingespritzt werden kann. In diesem Falle kann der nicht-demontierbare Festanschluss bereits bei der Herstellung von Gehäusekomponenten aus Kunststoffmaterial hergestellt werden, so dass auf zusätzliche Abdichtmaßnahmen vollständig verzichtet werden kann.

### Kurze Beschreibung der Zeichnungen

Ausführungsformen der Erfindung werden anhand der Zeichnungen und der nachfolgenden Beschreibung näher erläutert.

Es zeigen:
- Figur 1: Eine perspektivische Ansicht eines E-Achsen-Moduls mit einer Hochvoltkupplung,
- Figuren 2-4: Einzelne Montageschritte zur Befestigung eines Hochvoltanschlusskabels an einer Hochvoltkupplung gemäß Figur 1 und
- Figur 5: Ein Ausführungsbeispiel der erfindungsgemäß vorgeschlagenen Lösung.

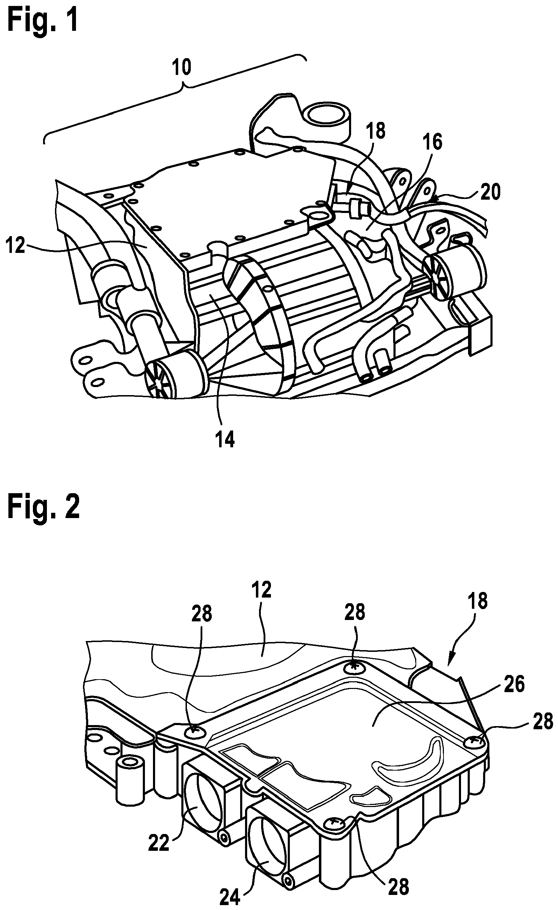

Figur 1 zeigt ein E-Achsen-Modul 10, auf dessen Oberseite eine Leistungselektronik 12 aufgenommen ist. Diese ist auf der Oberseite eines Gehäuses 14 befestigt, welches ein getriebeseitiges Gehäuseteil 16 umfasst. Die Leistungselektronik 12 weist eine seitlich angeordnete Hochvoltkupplung 18 auf. An dieser ist ein Hochvoltanschlusskabel 20 angeschlossen. Den Figuren 2 bis 4 sind Montageschritte zu entnehmen, die durchgeführt werden müssen, um das Hochvoltanschlusskabel 20 mit einem Ende an der Hochvoltkupplung 18 gemäß der Darstellung in Figur 1 zu befestigen.

Figur 2 zeigt, dass die Hochvoltkupplung 18 ein positives Anschlussterminal 22 sowie ein negatives Anschlussterminal 24 aufweist. Die Hochvoltkupplung 18 ist über eine Abdeckung 26 verschlossen. Die Abdeckung 26 ist beispielsweise mit Schrauben 28 auf der Oberseite der Leistungselektronik 12 befestigt.

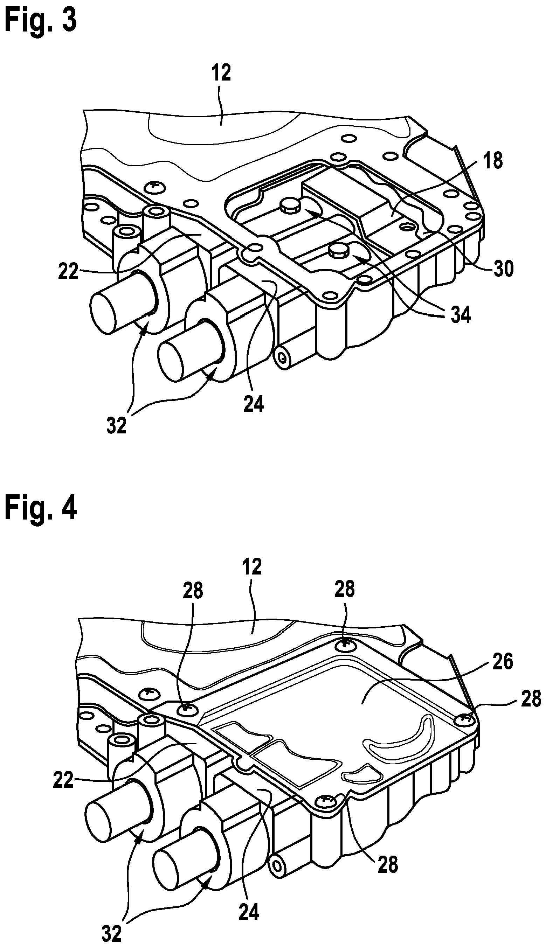

Figur 3 zeigt eine freigelegte Zugangsöffnung 30, nachdem die Abdeckung 26 nach Lösen der Schrauben 28 entfernt wurde. Innerhalb der freigelegten Zugangsöffnung 30 werden Kabelenden des Hochvoltanschlusskabels 20 mit Anschlüssen mittels einer Verschraubung 34 verbunden. Des Weiteren werden in die Anschlussterminals 22, 24 eingesteckte Kabelenden 32 eingeführt.

Figur 4 zeigt, dass nach Durchführung der Verschraubung 34 und dem Einstecken der Kabelenden in das positive Anschlussterminal 22 beziehungsweise das negative Anschlussterminal 24 die Abdeckung 26 über die Schrauben 28 auf der freigelegten Zugangsöffnung 30 aufgelegt wird und diese somit verschlossen wird.

### Ausführungsformen der Erfindung

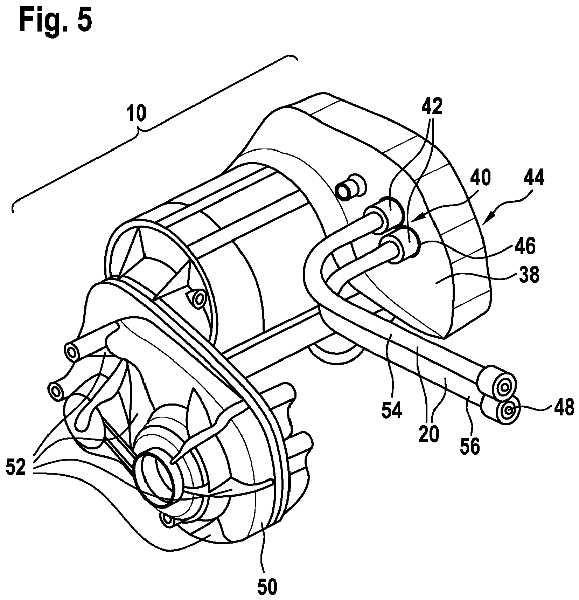

Figur 5 ist demgegenüber ein Ausführungsbeispiel des erfindungsgemäß vorgeschlagenen E-Achsen-Moduls 10 zu entnehmen. Das E-Achsen-Modul 10 gemäß der perspektivischen Darstellung in Figur 5 umfasst beispielsweise ein aus Kunststoffmaterial gegossenes oder spritzgegossenes Kunststoffgehäuseteil 38. An dem Kunststoffgehäuseteil 38 ist ein Hochvolteingang 40 ausgeführt. Am Hochvolteingang 40 befindet sich ein nicht-demontierbarer Festanschluss 46 des Hochvoltanschlusskabels 20. Wie aus der Darstellung gemäß Figur 5 hervorgeht, umfasst das Hochvoltanschlusskabel 20 einen ersten Kabelstrang 54 sowie einen zweiten Kabelstrang 56 und ist demnach zweipolig ausgebildet. Die beiden Kabelstränge 54 und 56 verlaufen beabstandet voneinander. Beide Kabelstränge 54 beziehungsweise 56 sind mit einem Ende in einem fahrzeugseitigen Stecker 48 aufgenommen. Wie aus Figur 5 hervorgeht, umfasst der nicht-demontierbare Festanschluss 46 des E-Achsen-Modul-seitigen Endes des Hochvoltanschlusskabels 20, Abdichtungen 42, die beispielsweise in Muffenform ausgebildet sein können. Durch derartige Abdichtungen 42 kann eine staubdichte und/oder spritzwasserdichte Abdichtung des nicht-demontierbaren Festanschlusses 46 am Hochvolteingang 40 erreicht werden. In vorteilhafter Weise liegt der Hochvolteingang 40 auf einer Seitenfläche des Kunststoffgehäuseteiles 38, welches einen Hohlraum 44 aufnimmt, in dem eine in Figur 5 nicht dargestellte Leistungselektronik 12 aufgenommen werden kann. Über die erfindungsgemäß vorgeschlagene Lösung ist ein nicht-demontierbarer Festanschluss 46 zwischen dem E-Modul-Achsen-seitigen Ende des Hochvoltanschlusskabels 20 und der Leistungselektronik 12 gewährleistet.

Aus der Darstellung gemäß Figur 5 geht des Weiteren hervor, dass das dort in perspektivischer Ansicht dargestellte E-Achsen-Modul 10 neben dem Kunststoffgehäuseteil 38, in welchem auch der Stator, der hier nicht näher dargestellten elektrischen Maschine des E-Achsen-Moduls 10 angeordnet sein kann, ein Getriebegehäuseteil 50 umfasst. Dieses kann zu Zwecken der Wärmeabfuhr, beispielsweise mit einer Außenverippung 52, wie sie in Figur 5 schematisch angedeutet ist, versehen sein.

Durch die erfindungsgemäß vorgeschlagene Lösung besteht die Möglichkeit, am E-Achsen-Modul-seitigen Ende des Hochvoltanschlusskabels 20 am Hochvolteingang 40 das dortige Kabelende direkt in das Kunststoffgehäuseteil 38 zu integrieren. Beispielsweise kann der nicht-demontierbare Festanschluss 46 am Hochvolteingang 40 in das Kunststoffmaterial des Kunststoffgehäuseteiles 38 eingegossen oder eingespritzt werden. In diesem Falle könnten die muffenartig ausgebildeten Abdichtungen 42 entfallen.

Durch die erfindungsgemäß vorgeschlagene Lösung entfällt die ansonsten erforderliche, jedoch äußerst selten genutzte Hochvoltkupplung 18, wie sie in den Figuren 1 bis 4 dargestellt ist, vollständig; vielmehr ist am zweipolig ausgebildeten Hochvoltanschlusskabel 20 lediglich ein gemeinsamer, fahrzeugseitiger Stecker 48 erforderlich, über welchen das E-Achsen-Modul 10 beim Einbau in ein Fahrzeug mit einer hier nicht dargestellten Spannungsversorgungsquelle verbunden werden kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. E-Achsen-Modul (10) mit einer elektrischen Maschine, einem Getriebe und einer Leistungselektronik (12), die über ein Hochvoltanschlusskabel (20) an einem Hochvolteingang (40) mit einer Spannungsquelle verbunden ist, **dadurch gekennzeichnet, dass** das Hochvoltanschlusskabel (20) am Hochvolteingang (40) mittels eines nicht-demontierbaren Festanschlusses (46) angeschlossen ist.

2. E-Achsen-Modul (10) gemäß Anspruch 1, **dadurch gekennzeichnet, dass** der nicht-demontierbare Festanschluss (46) mindestens eine staubdichte und/oder spritzwasserdichte Abdichtung (42) umfasst.

3. E-Achsen-Modul (10) gemäß den Ansprüchen 1 bis 2, **dadurch gekennzeichnet, dass** der nicht-demontierbare Festanschluss (46) des Hochvoltanschlusskabels (20) in ein Kunststoffgehäuseteil (38) eingegossen ist.

4. E-Achsen-Modul (10) gemäß den Ansprüchen 1 bis 2, **dadurch gekennzeichnet, dass** der nicht-demontierbare Festanschluss (46) des Hochvoltkabels (20) in das Kunststoffmaterial des Kunststoffgehäusesteiles (38) eingespritzt ist.

5. E-Achsen-Modul (10) gemäß den Ansprüchen 1 bis 4, **dadurch gekennzeichnet, dass** das am nicht-demontierbaren Festanschluss (46) angeschlossene Hochvoltanschlusskabel (20) einen fahrzeugseitigen Stecker (48) aufweist.

6. E-Achsen-Modul (10) gemäß den Ansprüchen 1 bis 5, **dadurch gekennzeichnet, dass** das Hochvoltanschlusskabel (20) zweipolig ausgeführt ist und einen ersten Kabelstrang (54) sowie einen zweiten Kabelstrang (56) umfasst.

7. E-Achsen-Modul (10) gemäß Anspruch 6, **dadurch gekennzeichnet, dass** die beiden Kabelstränge (54, 56) am fahrzeugseitigen Ende in einem gemeinsamen fahrzeugseitigen Stecker (48) aufgenommen sind.

8. Verwendung eines nicht-demontierbaren Festanschlusses (46) gemäß einem der vorstehenden Ansprüche zur elektrischen Verbindung zwischen einem Hochvoltanschlusskabel (20) und einem E-Achsen-Modul (10).
